(19) Europäisches Patentamt / European Patent Office / Office européen des brevets

(11) **EP 4 026 058 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **20751522.2**

(22) Anmeldetag: **04.08.2020**

(51) Internationale Patentklassifikation (IPC):
**G06N 3/098** (2023.01)    **G06N 3/045** (2023.01)

(52) Gemeinsame Patentklassifikation (CPC):
**G06N 3/045; G06N 3/0464; G06N 3/0495; G06N 3/098**

(86) Internationale Anmeldenummer:
**PCT/EP2020/071872**

(87) Internationale Veröffentlichungsnummer:
**WO 2021/043517 (11.03.2021 Gazette 2021/10)**

(54) **VERFAHREN ZUM KOMPRIMIEREN EINES NEURONALEN NETZES**

METHOD TO COMPRESS A NEURAL NETWORK

PROCÉDÉS DE COMPRESSION D'UN RÉSEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2019 DE 102019213459**

(43) Veröffentlichungstag der Anmeldung:
**13.07.2022 Patentblatt 2022/28**

(73) Patentinhaber: **Volkswagen Aktiengesellschaft 38440 Wolfsburg (DE)**

(72) Erfinder:
• **SCHLICHT, Peter**
  **38442 Wolfsburg (DE)**
• **KAPOOR, Nikhil**
  **38440 Wolfsburg (DE)**
• **VARGHESE, John Serin**
  **38126 Braunschweig (DE)**
• **SCHNEIDER, Jan David**
  **38444 Wolfsburg (DE)**

(56) Entgegenhaltungen:
**WO-A1-2018/218149    US-A1- 2019 114 543**

• **JUN ZHANG ET AL: "Mobile Edge Intelligence and Computing for the Internet of Vehicles", PROCEEDINGS OF THE IEEE, 2 June 2019 (2019-06-02), pages 246 - 261, XP055746600, Retrieved from the Internet <URL:https://arxiv.org/pdf/1906.00400.pdf> [retrieved on 20201103], DOI: 10.1109/JPROC.2019.2947490**

**Beschreibung**

Die Erfindung betrifft ein Verfahren zum Komprimieren eines Neuronalen Netzes. Ferner betrifft die Erfindung einen Flottenteilnehmer, einen zentralen Server und ein System.

Moderne Fahrerassistenzsysteme und Fahrfunktionen zum automatisierten Fahren verwenden zunehmend maschinelles Lernen, um unter anderem die Fahrzeugumgebung einschließlich anderer Verkehrsteilnehmer (z.B. Fußgänger und weitere Fahrzeuge) zu erkennen und deren Verhalten zu beschreiben. Hierbei erfolgt die Auswertung von Eingangsdaten (Input) aus verschiedenen Quellen (z.B. Kameras, Radar, Lidar) durch tiefe Neuronale Netze, welche an diesen unter anderem eine pixelweise Klassifikationen vornehmen (semantische Segmentierung) oder Umschließungsrahmen (bounding box) erkannter Objekte erzeugen.

In beiden Fällen werden üblicherweise Faltungsnetze (Convolutional Neural Networks, CNN) eingesetzt, welche im Training die Gewichte sogenannter Filter basierend auf dem Input parametrisieren. Die verwendeten Faltungsnetze nutzen hierbei zunehmend eine Vielzahl von Filtern und Schichten (layer), sodass der benötigte Zeit- bzw. Rechenaufwand zur Verarbeitung (Inferenz) von Eingangsdaten zu Ausgaben (Output) zunimmt. Da der Anwendung von Neuronalen Netzen im Bereich des automatischen Fahrens aufgrund der dynamischen Umgebung harte Einschränkungen bezüglich einer benötigten Rechenzeit obliegen und gleichzeitig die in Fahrzeugen einsetzbare Hardware (Rechenkapazitäten) nicht beliebig skaliert werden kann, ist die Größe des Neuronalen Netzes ein limitierender Faktor im Hinblick auf die Einsatzmöglichkeiten in solchen Systemen.

Sogenanntes Prunen (engl. Pruning) versucht die Größe des Neuronalen Netzes durch Entfernen von einzelnen Elementen, das heißt von Neuronen, Parametern bzw. ganzen Filtern, zu verringern. Hierbei ist die Wahl der zu entfernenden Neuronen bzw. Filter von Bedeutung. Unterschiedliche Filter können die Ausgabe des Netzes unterschiedlich stark beeinflussen. Es gilt also, durch ausgewählte Strategien diejenigen Filter zu selektieren, deren Entfernung die geringsten Auswirkungen auf die Ausgabe(-qualität) verursacht und dabei zugleich eine möglichst große Anzahl an Filtern zu prunen, um eine signifikante Verkleinerung des Netzes und somit möglichst geringe Inferenz- und Trainingszeiten zu erreichen.

Aus der US 2018/0336468 A1 sind Systeme und Verfahren zum Prunen eines Faltungsnetzes (CNN) bekannt. Das Verfahren umfasst das Extrahieren von Faltungsschichten aus einem trainierten CNN, wobei jede Faltungsschicht eine Kernelmatrix mit mindestens einem in einem entsprechenden Ausgangskanal der Kernelmatrix ausgebildeten Filter enthält, einem Merkmalskartensatz mit einer Merkmalskarte (feature map), die jedem Filter entspricht. Für jeden Kernel wird ein absolutes Kernelgewicht bestimmt und über jeden Filter aufsummiert, um eine Stärke jedes Filters zu bestimmen. Die Stärke jedes Filters wird mit einer Schwelle verglichen und ein Filter wird entfernt, wenn die bestimmte Stärke unterhalb der Schwelle liegt. Eine Merkmalskarte (feature map), die jedem der entfernten Filter entspricht, wird entfernt, um das CNN zu prunen. Das CNN wird erneut trainiert, um ein gepruntes CNN mit weniger Faltungsschichten zu erzeugen.

Aus der US 2018/0114114 A1 sind ein Verfahren, ein computerlesbares Medium und ein System zum Prunen eines Neuronalen Netzes bekannt. Das Verfahren umfasst die Schritte des Empfangens von Gradienten erster Ordnung einer Kostenfunktion relativ zu Schichtparametern für ein trainiertes Neuronales Netz und des Berechnens eines Pruningkriteriums für jeden Schichtparameter basierend auf dem Gradienten erster Ordnung, der dem Schichtparameter entspricht, wobei das Pruningkriterium eine Wichtigkeit jedes Neurons angibt, das in dem trainierten neuronalen Netz enthalten ist und dem Schichtparameter zugeordnet ist. Das Verfahren umfasst die zusätzlichen Schritte des Identifizierens mindestens eines Neurons mit der geringsten Wichtigkeit und des Entfernens des mindestens einen Neurons aus dem trainierten Neuronalen Netz, um ein gepruntes Neuronales Netzwerk zu erzeugen.

Aus Jun Zhang et al., Mobile Edge Intelligence and Computing for the Internet of Vehicles, Proceedings of the IEEE, 2. Juni 2019, Seiten 246-261, DOI: 10.1109/JPOC.2019.2947490, https://arxiv.org/pdf/1906.00400.pdf, ist ein Verfahren zum verteilten Lernen ("Federated Learning") bekannt.

Aus der US 2019/0114543 A1 ist ein lokales Lernsystem in einem lokalen Gerät für künstliche Intelligenz (KI) bekannt. Das lokale Lernsystem umfasst mindestens eine Datenquelle, einen Datensammler, einen Trainingsdatengenerator und eine lokale Lernmaschine. Der Datenkollektor ist mit der mindestens einen Datenquelle verbunden und wird zum Sammeln von Trainingsdaten verwendet. Der Trainingsdatengenerator ist mit dem Datensammler verbunden und wird zur Analyse der Trainingsdaten verwendet, um Beispielpaare für überwachtes Lernen oder unmarkierte Daten für unbeaufsichtigtes Lernen zu erstellen. Die lokale Lernmaschine ist mit dem Trainingsdatengenerator verbunden und enthält ein lokales

Neuronales Netz. Das lokale Neuronale Netz wird durch die gepaarten Beispiele oder die unmarkierten Daten in einer Trainingsphase trainiert und inferiert in einer Inferenzphase. Zusätzlich wird ein Pruning eines neuronalen Netzes auf dem Server beschrieben.

Aus der WO 2018/218149 A1 sind Verfahren, Systeme, Geräte und materielle, nichtflüchtige computerlesbare Medien zur Bereitstellung von Daten, einschließlich Fahrzeugkartendienstdaten, bekannt. Die offenbarte Technologie kann Vorgänge ausführen, einschließlich des Empfangens von Fahrzeugkartendienstdaten von Clientsystemen. Die Daten des Fahrzeugkartendienstes können Informationen zu einem geografischen Gebiet oder Sensorbeobachtungen eines Fahrzeugs umfassen. Es können zwei oder mehr Teile der Fahrzeugkartendienstdaten bestimmt werden, die ein Clientsystem abonniert hat. Es können fusionierte Daten generiert werden, die auf den zwei oder mehr Teilen der Fahrzeugkartendienstdaten basieren, die das Clientsystem abonniert hat. Darüber hinaus kann dem Client-System Zugriff auf die fusionierten Daten ermöglicht werden. Der Zugriff auf die fusionierten Daten kann die Autorisierung zum Senden oder Empfangen von Teilen der Fahrzeugkartendienstdaten umfassen, die mit den fusionierten Daten verknüpft sind.

Der Erfindung liegt die Aufgabe zu Grunde, ein Verfahren zum Komprimieren eines Neuronalen Netzes, insbesondere im Hinblick auf eine Auswahl von zu prunenden Elementen des Neuronalen Netzes, zu verbessern.

Die Aufgabe wird erfindungsgemäß durch ein Verfahren mit den Merkmalen des Patentanspruchs 1, einen Flottenteilnehmer mit den Merkmalen des Patentanspruchs 9, einen zentralen Server mit den Merkmalen des Patentanspruchs 10 und ein System mit den Merkmalen des Patentanspruchs 11 gelöst. Vorteilhafte Ausgestaltungen der Erfindung ergeben sich aus den Unteransprüchen.

In einem ersten Aspekt der Erfindung wird insbesondere ein Verfahren zum Komprimieren eines Neuronalen Netzes zur Verfügung gestellt, wobei Flottenteilnehmer einer Fahrzeugflotte lokal das Neuronale Netz ausführen und jeweils während mindestens einer Inferenzphase eine Auswahl von Elementen des Neuronalen Netzes bestimmen, die geprunt werden sollen, wobei die Flottenteilnehmer die jeweils bestimmte Auswahl an einen zentralen Server übermitteln, wobei der zentrale Server die jeweils übermittelten Auswahlen zusammenführt und eine zusammengeführte Auswahl erzeugt, und wobei der zentrale Server das Neuronale Netz auf Grundlage der zusammengeführten Auswahl prunt.

In einem zweiten Aspekt der Erfindung wird insbesondere ein Flottenteilnehmer für eine Fahrzeugflotte geschaffen, umfassend eine Recheneinrichtung, wobei die Recheneinrichtung derart ausgebildet ist, lokal ein Neuronales Netz auszuführen und jeweils während mindestens einer Inferenzphase eine Auswahl von Elementen des Neuronalen Netzes zu bestimmen, die geprunt werden sollen, und die bestimmte Auswahl an einen zentralen Server zu übermitteln.

In einem dritten Aspekt der Erfindung wird insbesondere ein zentraler Server geschaffen, umfassend eine Recheneinrichtung, wobei die Recheneinrichtung derart ausgebildet ist, von Flottenteilnehmern jeweils übermittelte Auswahlen von Elementen eines Neuronalen Netzes zusammenzuführen und eine zusammengeführte Auswahl zu erzeugen, und das Neuronales Netz auf Grundlage der zusammengeführten Auswahl zu prunen.

In einem vierten Aspekt der Erfindung wird insbesondere ein System geschaffen, umfassend mindestens einen Flottenteilnehmer gemäß dem zweiten Aspekt der Erfindung und einen zentralen Server gemäß dem dritten Aspekt der Erfindung. Das System führt insbesondere das Verfahren gemäß dem ersten Aspekt der Erfindung aus.

Das Verfahren und das System ermöglichen es, ein Neuronales Netz auf effiziente Weise zu komprimieren. Dies wird erreicht, indem auf Flottenteilnehmer einer Fahrzeugflotte zurückgegriffen wird. Die Flottenteilnehmer führen das Neuronale Netz mittels einer Recheneinrichtung aus. Während mindestens einer Inferenzphase werden Elemente des Neuronalen Netzes bestimmt, die geprunt werden sollen. Die bestimmten Elemente werden jeweils in Form einer Auswahl an einen zentralen Server übermittelt. Der zentrale Server sammelt die jeweiligen Auswahlen der Flottenteilnehmer und erzeugt hieraus eine zusammengeführte Auswahl. Das Neuronale Netz wird anschließend, insbesondere mittels des zentralen Servers, auf Grundlage der zusammengeführten Auswahl geprunt.

Ein Vorteil der Erfindung ist, dass das Auswählen zu prunender Elemente auf Grundlage einer vergrößerten Datenbasis erfolgt, da eine Vielzahl von Flottenteilnehmern Elemente des Neuronalen Netzes unter Berücksichtigung verschiedener Situationen auswählt. Je mehr Flottenteilnehmer beim Bestimmen der Auswahl der zu prunenden Elemente des Neuronales Netzes berücksichtigt werden, desto mehr Situationen können berücksichtigt werden. Das Auswählen der zu prunenden Elemente ist hierdurch verbessert.

Die Recheneinrichtungen der Flottenteilnehmer weisen jeweils insbesondere eine Speichereinrichtung auf oder können jeweils auf eine solche Speichereinrichtung zugreifen. Die Recheneinrichtungen können als eine Kombination von Hardware und Software ausgebildet sein, beispielsweise als Programmcode, der auf einem Mikrocontroller oder Mikroprozessor ausgeführt wird. Die Recheneinrichtungen betreiben insbesondere das Neuronale Netz, das heißt die Recheneinrichtungen führen die zum Betreiben des Neuronalen Netzes notwendigen Rechenoperationen auf bereitgestellten Eingangsdaten aus, sodass Aktivierungen bzw. Werte an Ausgängen des Neuronalen Netzes in Form von Ausgangsdaten inferiert und bereitgestellt werden können. In den jeweils zugehörigen Speichereinrichtungen sind hierzu jeweils lokale Kopien des Neuronalen Netzes hinterlegt, das heißt eine Struktur und zugehörige Gewichtungen sowie Parameter des Neuronalen Netzes.

Die Recheneinrichtung des zentralen Servers ist entsprechend ausgebildet. In der Speichereinrichtung des zentralen Servers liegt eine zentrale Kopie des Neuronalen Netzes. Das Prunen wird an der zentralen Kopie des Neuronalen Netzes durchgeführt.

Eingangsdaten sind insbesondere Sensordaten, insbesondere ein Sensordatenstrom von im Zeitverlauf erfassten Sensordaten. Insbesondere werden die Sensordaten von Sensoren erfasst und einer Eingangsschicht des Neuronalen Netzes zugeführt, beispielsweise über eine hierfür ausgebildete Eingangsschnittstelle. Ein Sensor ist insbesondere eine Kamera, ein Lidar- oder ein Radarsensor. Es können prinzipiell jedoch auch fusionierte Sensordaten verwendet werden.

Ein Flottenteilnehmer ist insbesondere ein Kraftfahrzeug. Prinzipiell kann ein Flottenteilnehmer jedoch auch ein anderes Land-, Wasser-, Luft- oder Raumfahrzeug sein.

Das Übermitteln der Auswahlen von den Flottenteilnehmern an den zentralen Server erfolgt insbesondere über hierfür vorgesehene Kommunikationsschnittstellen der Flottenteilnehmer und des zentralen Servers. Eine Kommunikation erfolgt hierbei insbesondere drahtlos.

Das Neuronale Netz ist insbesondere ein tiefes Neuronales Netz, insbesondere ein Faltungsnetz (Convolutional Neuronal Network, CNN). Insbesondere ist vorgesehen, dass das Neuronale Netz eine Wahrnehmungsfunktion ausführt. Beispielsweise kann das Neuronale Netz dazu dienen, an erfassten Sensordaten, beispielsweise Kameradaten, eine Objektklassifikation vorzunehmen. Ferner können auch Bereiche der Sensordaten identifiziert werden, in denen Objekte zu finden sind (Bounding Box).

Ein Element ist insbesondere ein Neuron des Neuronalen Netzes. Handelt es sich bei dem Neuronalen Netz um ein Faltungsnetz, so ist ein Element insbesondere ein Filter des Faltungsnetzes.

Prunen des Neuronalen Netzes soll insbesondere bedeuten, dass das Neuronale Netz in seiner Struktur verändert, insbesondere beschnitten bzw. verkleinert wird. Dies erfolgt durch Entfernen von Elementen und/oder Teilen (z.B. Parameter oder Eingangskanäle etc.) der Elemente aus dem Neuronalen Netz. Auf Grund der geänderten, insbesondere beschnittenen, Struktur, kann das geprunte Neuronale Netz mit einer geringeren Rechenleistung auf Eingangsdaten angewandt werden. Das geprunte Neuronale Netz ist dann in seiner Struktur komprimiert.

Es kann insbesondere vorgesehen sein, dass das Verfahren zyklisch wiederholt wird. Das Verfahren kann beispielsweise solange wiederholt werden, bis ein Abbruchkriterium erfüllt ist. Das Abbruchkriterium kann beispielsweise ein Unterschreiten einer funktionalen Güte des (fortschreitend) geprunten Neuronalen Netzes sein.

Es kann insbesondere vorgesehen sein, dass auf das Prunen nachfolgend ein Nachtrainieren des geprunten Neuronalen Netzes erfolgt, um eine funktionale Güte (Performanz) des (geprunten) Neuronalen Netzes nach dem Prunen wieder herzustellen.

Beim Prunen ist insbesondere vorgesehen, dass das Neuronale Netz in homogener Weise geprunt wird. Homogen soll hierbei bedeuten, dass im Mittel alle Bereiche des Neuronalen Netzes gleich stark geprunt werden. Hierdurch kann verhindert werden, dass Bereiche oder einzelne Schichten des Neuronalen Netzes übermäßig geprunt werden und hierdurch eine Funktionalität bzw. eine funktionale Güte des Neuronalen Netzes nachteilig beeinträchtigt wird.

Das Auswählen der Elemente des Neuronalen Netzes kann auf verschiedene Arten erfolgen. In einer einfachen Ausführungsform werden beispielsweise diejenigen Elemente des Neuronalen Netzes zum Prunen von den Flottenteilnehmern ausgewählt, die den geringsten Einfluss auf ein Ausgangsergebnis des Neuronalen Netzes aufweisen. Es kann ferner auch vorgesehen sein, dass Elemente ausgewählt werden, an deren Ausgängen Aktivierungen stets unterhalb eines vorgegebenen Schwellenwertes liegen.

Die ausgewählten Elemente werden beispielsweise in Form einer Liste, einer Tabelle oder einer Datenbank gesammelt und zu der Auswahl zusammengestellt. In der Liste, der Tabelle oder der Datenbank ist beispielsweise eine eindeutige Kennzeichnung eines jeweils ausgewählten Elements vermerkt sowie gegebenenfalls weitere Eigenschaften oder Werte, wie beispielsweise eine maximale, minimale und/oder durchschnittliche Aktivierung des betrachteten Elements. Insbesondere umfasst die Liste, die Tabelle oder die Datenbank ein jeweils verwendetes Auswahlkriterium bzw. ein zu dem jeweils verwendeten Auswahlkriterium zugehörigen Wert des jeweiligen Elements. Das Auswahlkriterium definiert hierbei die Bedingungen, unter denen die Elemente ausgewählt werden. Die Liste, die Tabelle oder die Datenbank wird insbesondere in Form eines digitalen Datenpakets über die Kommunikationsschnittstellen an den zentralen Server übermittelt.

Das Zusammenführen der Listen / Rangfolgen / Tabellen kann auf verschiedene Weise erfolgen. Insbesondere können hierbei Mittelwerte gebildet werden und/oder andere Mittelungsverfahren eingesetzt werden, beispielsweise arithmetische Mittelwerte, geometrische Mittelwerte, momentenbasierte Mittelungsverfahren, schwarmbasierte Mittelungsverfahren, geographische Mittelungsverfahren in Abhängigkeit einer Fahrstrecke des/der Flottenteilnehmer und/oder sicherheitsfokussierte bzw. situationsabhängige Mittelungsverfahren.

Insbesondere kann das Zusammenführen das Bestimmen der von den Flottenteilnehmern am häufigsten ausgewählten Elemente umfassen, wobei die zusammengeführte Auswahl die am häufigsten ausgewählten Elemente umfasst.

Es kann vorgesehen sein, dass das geprunte Neuronale Netz nach dem Prunen ausgegeben wird, beispielsweise in Form eines die Struktur und die Gewichtungen bzw. Parameter des Neuronalen Netzes beschreibenden digitalen Datensatzes.

Es kann vorgesehen sein, dass nur ausgewählte Flottenteilnehmer der Fahrzeugflotte das Verfahren ausführen. Andere Flottenteilnehmer können hingegen lediglich das Neuronale Netz anwenden und erhalten beispielsweise nach einem Prunen des Neuronalen Netzes von dem zentralen Server das geprunte Neuronale Netz. Eine Auswahl von zu prunenden Elementen wird von den anderen Flottenteilnehmern hingegen nicht getroffen oder übermittelt. Dies hat den Vorteil, dass die ausgewählten Flottenteilnehmer zum Durchführen des Verfahrens technisch besser ausgerüstet sein können, beispielsweise im Hinblick auf eine Sensorik und/oder eine Speicherkapazität einer Speichereinrichtung.

Es ist vorgesehen, dass das geprunte Neuronale Netz anschließend an mindestens einen Flottenteilnehmer übermittelt wird. Dies erfolgt beispielsweise in Form eines über die Kommunikationsschnittstellen übermittelten digitalen Datenpakets, das eine Struktur und Gewichtungen sowie Parameter des geprunten Neuronalen Netzes umfasst. Die Flottenteilnehmer empfangen das geprunte Neuronale Netz und ersetzen anschließend das in einer jeweiligen Speichereinrichtung hinterlegte Neuronale Netz durch das empfangene geprunte Neuronale Netz. Anschließend kann das Verfahren erneut an dem geprunten Neuronalen Netz ausgeführt werden.

In einer Ausführungsform ist vorgesehen, dass das Übermitteln der Auswahl an den zentralen Server erfolgt, wenn mindestens ein Übermittlungskriterium erfüllt ist. Hierdurch kann eine unnötige Kommunikation zwischen den Flottenteilnehmern und dem zentralen Server vermieden werden. Ein Übermittlungskriterium kann beispielsweise eine bestimmte Anzahl von lokal gesammelten Elementen des Neuronalen Netzes sein. Ein Übermittlungskriterium kann auch fordern, dass eine Auswahl sich nach mehreren Durchläufen bzw. Inferenzphasen nicht mehr ändert.

In einer Ausführungsform ist vorgesehen, dass die Flottenteilnehmer jeweils eine Rangfolge der ausgewählten Elemente erstellen und die Auswahl in Form der erstellten Rangfolge an den zentralen Server übermittelt wird, wobei der zentrale Server zum Zusammenführen eine zusammengeführte Rangfolge auf Grundlage der übermittelten Rangfolgen erstellt, und wobei das Prunen des Neuronalen Netzes auf Grundlage der zusammengeführten Rangfolge erfolgt. Hierdurch können gezielt solche Elemente geprunt werden, die gemäß einem Kriterium, nach der die Rangfolge erstellt wurde, die größten Werte erreichen.

In einer Ausführungsform ist vorgesehen, dass dem Neuronalen Netz zum Bestimmen der jeweiligen Auswahl jeweils zeitlich sich ändernde Eingangsdaten zugeführt werden, wobei zeitliche Aktivierungsdifferenzen von Elementen des Neuronalen Netzes für zeitlich benachbarte Eingangsdaten bestimmt werden, und wobei das Auswählen der Elemente des Neuronalen Netzes in Abhängigkeit der bestimmten zeitlichen Aktivierungsdifferenzen erfolgt. Dies ermöglicht es, das Neuronale Netz unter Berücksichtigung eines stabilitätsorientierten Kriteriums zu komprimieren. Dies erfolgt dadurch, dass dem Neuronalen Netz sich zeitlich ändernde Eingangsdaten zugeführt werden. Durch die zeitliche Änderung der Eingangsdaten, ändern sich auch Aktivierungen bzw. Werte an jeweiligen Ausgängen der einzelnen Elemente des Neuronalen Netzes. Eine zeitliche Änderung der Aktivierungen bzw. Werte an den Ausgängen wird dann über zeitliche Aktivierungsdifferenzen der Elemente des Neuronalen Netzes abgebildet. Die Ausführungsform beruht hierbei auf der folgenden Überlegung: Da die Eingangsdaten, welche insbesondere auf Grundlage von erfassten Sensordaten bereitgestellt werden, in der Regel bei einer kleinen Änderung der Zeit nur wenig variieren, sollten auch die Aktivierungsdifferenzen, die für diese zeitliche Änderung an den Ausgängen der Elemente bestimmt werden, nur wenig variieren. Große Aktivierungsdifferenzen deuten daher auf instabile Elemente in dem Neuronalen Netz hin. Über das Bestimmen der zeitlichen Aktivierungsdifferenzen können die instabilen Elemente identifiziert werden. Sind die instabilen Elemente identifiziert, so können diese später zentral im zentralen Server im Wege des Prunings aus der Struktur des Neuronalen Netzes entfernt werden.

Eine Aktivierungsdifferenz ist insbesondere eine Differenz, die aus Aktivierungen bzw. Werten eines Ausgangs bestimmt wird, die von einem Element des Neuronalen Netzes zu benachbarten, insbesondere aufeinanderfolgenden, Zeitpunkten inferiert bzw. berechnet werden. Sind die Eingangsdaten beispielsweise Kameradaten, so können die Eingangsdaten mit zwei zeitlich aufeinanderfolgenden Einzelbildern der Kameradaten korrespondieren. Über die Aktivierungsdifferenz wird daher eine zeitliche Fluktuation der Aktivierungen am Ausgang eines Elements des Neuronalen Netzes in Abhängigkeit zeitlich variierender Eingangsdaten abgebildet.

Die Eingangsdaten sind insbesondere Sensordaten, insbesondere ein Sensordatenstrom von im Zeitverlauf erfassten Sensordaten. Insbesondere werden die Sensordaten von Sensoren erfasst und einer Eingangsschicht des Neuronalen Netzes zugeführt, beispielsweise über eine hierfür ausgebildete Eingangsschnittstelle.

Ist das Neuronale Netz ein Faltungsnetz, so werden die Aktivierungsdifferenzen jeweils für die Filter des Faltungsnetzes bestimmt.

Wird das Verfahren zyklisch wiederholt, so kann das Wiederholen des Verfahrens beispielsweise abgebrochen werden, wenn die Aktivierungsdifferenzen unterhalb eines vorgegebenen Schwellenwertes liegen, das heißt wenn ein vorgegebener Grad an Stabilität erreicht ist.

Insbesondere ist vorgesehen, dass aus den bestimmten Aktivierungsdifferenzen elementeweise Mittelwerte gebildet werden, wobei das Prunen in Abhängigkeit der gebildeten Mittelwerte durchgeführt wird. Hierdurch können kurzzeitig auftretende Spitzen in den Aktivierungsdifferenzen berücksichtigt bzw. abgeschwächt werden. Derartige Spitzen führen alleine dann nicht dazu, dass das zugehörige Element des Neuronalen Netzes als instabil identifiziert wird. Erst wenn ein für dieses Element bestimmter Mittelwert aus mehreren Aktivierungsdifferenzen beispielsweise einen Schwellenwert überschreitet, wird das zugehörige Element zum Prunen ausgewählt. Die Mittelwerte können als arithmetisches Mittel, zeitliches Mittel oder geometrisches Mittel bestimmt werden. Das Bilden von Mittelwerten kann sowohl von den Flottenteilnehmern durchgeführt werden als auch von dem zentralen Server.

Das Zusammenführen der Auswahlen im zentralen Server, das auch als Aggregieren bezeichnet werden kann, kann insbesondere das Bilden eines arithmetischen Mittelwertes, geometrische Mittelungsverfahren (z.B. können Schwerpunkte von aus einzelnen Rangfolgen gebildeten Vektoren gebildet werden), momentenbasierte Mittelungsverfahren, schwarmbasierte Mittelungsverfahren, geographische Mittelungsverfahren und/oder sicherheitsfokussierte Mittelungsverfahren umfassen.

Schwarmbasierte Mittelungsverfahren können insbesondere als partielle Filter ausgebildet sein, das heißt es werden aus den Auswahlen der einzelnen Flottenteilnehmer Untermengen ausgewählt und eine Mittelung erfolgt jeweils nur innerhalb dieser Untermengen. Die Untermengen können hierbei beispielsweise in Abhängigkeit einer geographischen Position oder Region, einer Fahrstrecke, eines Zeitpunktes (Uhrzeit, Tageszeit, Wochentag, Monat, Jahreszeit etc.) oder anderen Eigenschaften gebildet werden. Die Untermengen werden hierbei stets auf Grundlage von Gemeinsamkeiten der die Auswahlen bereitstellenden Flottenteilnehmer bzw. der Umstände, unter denen die Auswahlen erstellt wurden, gebildet.

Sicherheitsfokussierte Mittelungsverfahren berücksichtigen insbesondere eine Situation, in der ein Element des Neuronalen Netzes zum Prunen ausgewählt wurde. Diese Situation kann dann Einfluss auf die bestimmten Rangfolgen haben. Beispielsweise können sicherheitskritische Situationen (z.B. wenn kleine Kinder sich im Umfeld eines Kraftfahrzeugs befinden) dazu führen, dass ausgewählte Elemente in der Rangfolge weiter nach oben, das heißt in Richtung der höheren Ränge verschoben werden. Insbesondere wenn eine zeitliche Aktivierungsdifferenz zum Auswählen der Elemente verwendet wird, kann hierdurch eine "Bestrafung" eines Elements bzw. eines Filters vergrößert (oder verringert) werden, sodass situationsbedingte Umstände einen Einfluss auf die Rangfolge haben.

In einer Ausführungsform ist vorgesehen, dass zumindest ein Teil der bestimmten Aktivierungsdifferenzen in Abhängigkeit von mindestens einem Einflussparameter bestimmt wird. Hierdurch kann beispielsweise erreicht werden, dass die Aktivierungsdifferenzen im zeitlichen Verlauf oder situationsabhängig beeinflusst werden können. Beispielsweise kann eine Geschwindigkeit (bereitgestellt z.B. von einem GPS-Sensor), ein aktuelles Wetter (bereitgestellt z.B. von einem Regensensor) und/oder ein Lenkwinkel (bereitgestellt z.B. von einem Lenkwinkelsensor) dazu verwendet werden, eine bestimmte Aktivierungsdifferenz situationsbedingt zu verstärken oder abzuschwächen. Insbesondere situationsbedingte Sensoreigenschaften können hierdurch berücksichtigt werden.

In einer Ausführungsform ist vorgesehen, dass die Rangfolge der Elemente auf Grundlage der bestimmten zeitlichen Aktivierungsdifferenzen erstellt wird, wobei das Prunen in Abhängigkeit der erstellten Rangfolge durchgeführt wird. Insbesondere erfolgt das Erstellen der Rangfolge auf Grundlage von jeweiligen Mittelwerten der bestimmten Aktivierungsdifferenzen. Ausgehend von der erstellten Rangfolge kann beispielsweise vorgesehen sein, dass eine vorgegebene Anzahl von Rängen später beim Prunen im zentralen Server berücksichtigt wird, beispielsweise die 10, 100 oder 1000 Elemente des Neuronalen Netzes (z.B. die 10, 100 oder 1000 Filter des Faltungsnetzes), die die größten (gemittelten) Aktivierungsdifferenzen aufweisen. Das Erstellen der Rangfolge ermöglicht es, das Neuronale Netz zu komprimieren und hierbei gezielt die instabilsten Elemente auszuwählen und zu prunen. Die von den Flottenteilnehmern erstellten und als jeweilige Auswahl an den zentralen Server übermittelten Rangfolgen werden von dem zentralen Server zu einer zusammengeführten Rangfolge zusammengeführt.

In einer weiterbildenden Ausführungsform ist insbesondere vorgesehen, dass die Rangfolge derart bestimmt wird, dass die Elemente des Neuronalen Netzes mit den größten zeitlichen Aktivierungsdifferenzen geprunt werden. Hierdurch werden die instabilsten Elemente des Neuronalen Netzes aus dem Neuronalen Netz entfernt.

Eine Rangfolgenfunktion zum Bestimmen einer (In-)Stabilität eines Elements des Neuronalen Netzes kann in einem einfachen Fall definiert sein durch eine zeitliche Aktivierungsdifferenz zwischen Aktivierungen des Elementes in Bezug auf eine (zeitliche) Änderung in den Eingangsdaten (z.B. eine Änderung in zeitlich benachbarten Videoeinzelbildern).

Sofern es sich bei den Eingangsdaten um Videoeinzelbilder handelt, beispielsweise um Kamerabilder einer Umfeldkamera, kann in einer Rangfolgenfunktion der Index der Strukturellen Ähnlichkeit (Structural Similarity Index, SSIM) zwischen den Videoeinzelbildern unterschiedlicher Zeitpunkte verwendet werden, um einen Unterschied zwischen zeitlich benachbarten Videoeinzelbilden zu bestimmen.

Für ein Convolutional Neural Network (CNN) werden in einer Weiterbildung der Rangfolgenfunktion für einen betrachteten Filter (auch als Filterkern bezeichnet) in einer Faltungsschicht des CNNs zusätzlich die zeitlichen Aktivierungsdifferenzen in einer voranstehenden Faltungsschicht des Neuronalen Netzes berücksichtigt. Hierdurch kann ein Einfluss einer voranstehenden Faltungsschicht beim Bestimmen bzw. Berechnen der zeitlichen Aktivierungsdifferenzen berücksichtigt bzw. entfernt werden. Der Gedanke dahinter ist, dass sich Aktivierungsdifferenzen durch das Neuronale Netz hindurch fortpflanzen können, da die zeitlichen Aktivierungsdifferenzen einer Faltungsschicht an die nachfolgende Faltungsschicht weitergegeben werden. Durch Berücksichtigung der zeitlichen Aktivierungsdifferenzen der jeweils voranstehenden Faltungsschicht werden die für einzelne Filter berechneten Aktivierungsdifferenzen über das gesamte Neuronale Netz bzw. schichtenübergreifend hinweg vergleichbar gemacht. Die Rangfolge der Elemente des Neuronalen Netzes lässt sich hierdurch verbessert bestimmen.

Es kann weiterbildend vorgesehen sein, dass über mehrere Zeitschritte gemittelt wird. Ferner kann vorgesehen sein, dass beispielsweise über mehrere Sätze von Eingangsdaten, beispielsweise mehrere jeweils aus Videoeinzelbildern bestehenden Videosequenzen gemittelt wird.

In einer weiterbildenden Ausführungsform ist vorgesehen, dass die zusammengeführte Rangfolge unter Berücksichtigung mindestens einer Zielgröße erstellt wird. Hierdurch kann eine erweiterte Rangfolge erzeugt werden. Insbesondere können durch Berücksichtigung der mindestens einen Zielgröße neben der Stabilität des Neuronalen Netzes weitere Zielvorgaben berücksichtigt werden. Diese Zielvorgaben können beispielsweise eine Robustheit des Neuronalen Netzes betreffen. Dient das Neuronale Netz beispielsweise zum Erkennen von Objekten in Kameradaten, so kann eine Robustheit gegenüber Helligkeitsänderungen als Zielgröße angestrebt werden. Hierbei wird bei der Auswahl der zeitlichen Varianz über die Eingangsdaten darauf geachtet, dass sich diese zeitliche Varianz lediglich als Varianz der mindestens einen Zielgröße manifestiert. Die Aufstellung der Rangfolge erfolgt dann analog. Ferner können Filter, die innerhalb des Neuronalen Netzes einen größeren Einfluss haben, trotz einer großen Aktivierungsdifferenz beibehalten werden. Auch können Filter, die einer Funktionalität nach anderen Filtern gleichen (z.B. Filter, die Kameradaten im Wege einer Faltung mit einer Filterfunktion filtern), in der Rangfolge auf weiter vorne liegende Ränge verschoben werden, das heißt beim Prunen bzw. beim Entfernen bevorzugt werden. Hingegen können Filter, die anderen Filtern nicht ähneln, in der Rangfolge auf weiter hinten liegende Ränge verschoben werden, das heißt weniger bevorzugt geprunt werden. Weitere Zielgrößen können pluralitätsorientiert sein, das heißt dafür sorgen, dass viele verschiedene Merkmale in den Eingangsdaten erkannt bzw. herausgefiltert werden. Entsprechend wird eine bestimmte Rangfolge dahingehend angepasst, dass weiterhin viele verschiedene Merkmale bzw. eine Mindestanzahl an unterschiedlichen Merkmalen erkannt bzw. herausgefiltert werden kann. Eine weitere Zielgröße kann auch eine Leistungsfähigkeit (auch als Performanz bezeichnet) des Neuronalen Netzes sein. Einfach ausgedrückt kann die zusammengeführte Rangfolge derart bestimmt und/oder angepasst werden, dass sämtliche vorgesehenen Zielgrößen bei der Auswahl der zu prunenden Elemente bzw. Filter des Neuronalen Netzes berücksichtigt werden.

In einer Ausführungsform ist vorgesehen, dass das Bestimmen der Auswahlen, insbesondere über die Aktivierungsdifferenzen, und das Prunen auf ausgewählte Schichten des Neuronalen Netzes beschränkt ist. Hierdurch können Schichten, die beispielsweise einer Merkmalsextraktion dienen, vom Prunen ausgeschlossen werden. Vor allem für Neuronale Netze, die verschiedene Aufgaben erfüllen (Multi-task-learning) oder deren Aufgabenerfüllung in verschiedene Teilschritte zerfällt, lässt sich das Prunen so auf bestimmte Teilaufgaben konzentrieren. Ein Beispiel hierfür liegt in Region-Proposal-Netzwerken, die für die Objekterkennung zuerst relevante Bildausschnitte identifizieren und diese nachfolgend klassifizieren und bewerten. Hierbei kann es zielführend sein, das Prunen auf die Klassifikation zu konzentrieren, um ein durch das Prunen ausgelöstes Übersehen relevanter Bildbereiche zu verhindern.

In einer Ausführungsform ist vorgesehen, dass das Neuronale Netz im Anschluss an das Prunen nachtrainiert wird. Hierdurch kann eine funktionale Güte des geprunten bzw. komprimierten Neuronalen Netzes verbessert werden. Hierbei muss kein vollständiges Training durchgeführt werden. Es kann hingegen vorgesehen sein, dass das geprunte bzw. komprimierte Neuronale Netz nur mit einem Teil von ursprünglich zum Trainieren verwendeten Trainingsdaten nachtrainiert wird. Das Nachtrainieren erfolgt insbesondere mittels des zentralen Servers.

In einer Ausführungsform ist vorgesehen, dass die Elemente zum Prunen zumindest vorerst deaktiviert werden. Hierzu werden Parameter des zu prunenden Elementes beispielsweise auf Null gesetzt, sodass das Element in dem Neuronalen Netz keinen Einfluss mehr auf ein Ergebnis in der nachfolgenden Schicht bzw. der Ausgangsschicht des Neuronalen Netzes hat. Dies hat den Vorteil, dass das Deaktivieren gegenüber einem Entfernen eines Elementes des Neuronalen Netzes leichter wieder rückgängig gemacht werden kann. Stellt sich nach dem Deaktivieren eines Elements beispielsweise heraus, dass eine funktionale Güte des Neuronalen Netzes zu stark beeinträchtigt ist, so kann das Element wieder aktiviert werden. Insbesondere kann das wieder aktivierte Element anschließend markiert werden, sodass es bei nachfolgenden Durchläufen des Verfahrens nicht erneut deaktiviert und/oder geprunt wird. Im anderen Fall kann das deaktivierte Element in einem späteren Schritt entfernt werden, das heißt eine Struktur des Neuronalen Netzes wird angepasst. Dies erfolgt insbesondere, wenn eine funktionale Güte oder sonstige Zielgrößen trotz des deaktivierten Elements erreicht werden.

In einer Ausführungsform ist vorgesehen, dass das Prunen erst erfolgt, wenn mindestens ein Auslösekriterium erfüllt ist. Hierdurch kann das Prunen immer dann erfolgen, wenn ein bestimmter Zustand erreicht ist. Insbesondere ein stetes bzw. zu häufiges Prunen und/oder eine zu stark variierende Auswahl der zu prunenden Elemente des Neuronalen Netzes können hierdurch verhindert werden. Das Auslösekriterium kann beispielsweise eine vorgegebene Anzahl von Elementen in der Rangfolge sein. Ferner kann das Auslösekriterium zusätzlich oder alternativ auch eine Konvergenz der Rangfolge sein. Konvergenz der Rangfolge bedeutet hierbei, dass sich die Elemente in der bestimmten Rangfolge über eine vorgegebene Anzahl an Durchläufen des Verfahrens oder eine vorgegebene Zeitdauer zumindest für eine vorgegebene Anzahl von Rängen nicht mehr verändert. Das Vorliegen des Auslösekriteriums wird insbesondere mittels des zentralen Servers überprüft.

In einer Ausführungsform ist vorgesehen, dass das Ermitteln der Rangfolge als iterativer Prozess ausgestaltet ist. Hierbei folgt auf das Übermitteln und Zusammenführen (bzw. den Aggregationsschritt) auf dem zentralen Server ein erneutes Verteilen der Rangfolge, beispielsweise als Tabelle, an die Flottenteilnehmer der Fahrzeugflotte. Die Flottenteilnehmer führen dann die Rangfolge fort bzw. aktualisieren diese, bis eine relevante Abweichung von der zuletzt verteilten Rangfolge eintritt und der nächste Aggregationsschritt ausgelöst wird. Dieser Prozess endet, wenn sich die Rangfolge nicht oder nur noch marginal ändert.

Weitere Merkmale zur Ausgestaltung des Flottenteilnehmers und des zentralen Servers sowie des Systems ergeben sich aus der Beschreibung von Ausgestaltungen des Verfahrens. Die Vorteile des Flottenteilnehmers und des zentralen Servers sowie des Systems sind hierbei jeweils die gleichen wie bei den Ausgestaltungen des Verfahrens.

Die Erfindung wird durch die Ansprüche definiert.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Systems;

Fig. 2    ein schematisches Ablaufdiagramm einer Ausführungsform des Verfahrens zum Komprimieren eines Neuronalen Netzes.

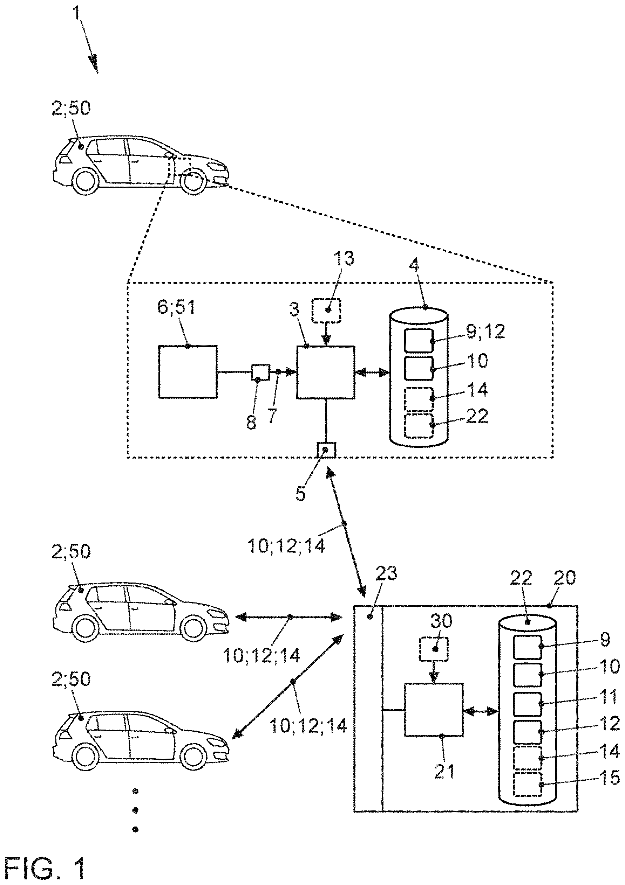

In Fig. 1 ist eine schematische Darstellung einer Ausführungsform des Systems 1 gezeigt. Das System 1 umfasst mehrere Flottenteilnehmer 2 in Form von Kraftfahrzeugen 50 und einen zentralen Server 20.

Jeder Flottenteilnehmer 2 umfasst eine Recheneinrichtung 3, eine Speichereinrichtung 4 und eine Kommunikationsschnittstelle 5. Ferner umfasst jeder Flottenteilnehmer 2 eine Sensorik 6, beispielsweise in Form einer Kamera 51, die Kameradaten als Eingangsdaten 7 über eine Eingangsschnittstelle 8 bereitstellt, und welche von der Eingangsschnittstelle 8 der Recheneinrichtung 3 zugeführt werden. In der Speichereinrichtung 4 ist jeweils ein Neuronales Netz 9 hinterlegt, das heißt eine Struktur, Gewichtungen und Parameter, die das Neuronale Netz 9 eindeutig beschreiben. Die Recheneinrichtung 3 kann Rechenoperationen in der Speichereinrichtung 4 ausführen und betreibt insbesondere das Neuronale Netz 9.

Der zentrale Server 20 umfasst eine Recheneinrichtung 21, eine Speichereinrichtung 22 und eine Kommunikationsschnittstelle 23.

Die Recheneinrichtung 3 der Flottenteilnehmer 2 ist derart ausgebildet, lokal das in der Speichereinrichtung 4 hinterlegte Neuronale Netz 9 auf den Eingangsdaten 7 auszuführen und jeweils während mindestens einer Inferenzphase eine Auswahl 10 von Elementen des Neuronalen Netzes 9 zu bestimmen, die geprunt werden sollen. Ist die Auswahl 10 erfolgt, so übermittelt die Recheneinrichtung 3 die bestimmte Auswahl 10 über die Kommunikationsschnittstelle 5 an einen zentralen Server 20.

Die Recheneinrichtung 21 des zentralen Servers 20 ist derart ausgebildet, von den Flottenteilnehmern 2 jeweils übermittelte Auswahlen 10 von Elementen des Neuronalen Netzes 9 über die Kommunikationsschnittstellen 5, 23 zu empfangen, zusammenzuführen und eine zusammengeführte Auswahl 11 zu erzeugen. Das Neuronales Netz 9 wird anschließend von der Recheneinrichtung 21 auf Grundlage der zusammengeführten Auswahl 11 geprunt, sodass ein gepruntes Neuronales Netz 12 erzeugt wird.

Es kann vorgesehen sein, dass das geprunte Neuronale Netz 12 anschließend über die Kommunikationsschnittstellen 5, 23 an die Flottenteilnehmer 2 übermittelt wird. Die Recheneinrichtungen 3 der Flottenteilnehmer 2 können dann das Neuronale Netz 9 in der Speichereinrichtung 4 durch das geprunte Neuronale Netz 12 ersetzen.

Es kann vorgesehen sein, dass das Übermitteln der Auswahlen 10 an den zentralen Server 20 erfolgt, wenn mindestens ein Übermittlungskriterium 13 erfüllt ist. Das Übermittlungskriterium 13 kann beispielsweise eine bestimmte Anzahl von lokal gesammelten bzw. ausgewählten Elementen des Neuronalen Netzes 9 sein. Ein Übermittlungskriterium 13 kann auch sein, dass eine Auswahl sich nach mehreren lokalen Durchläufen bzw. Inferenzphasen nicht mehr ändert.

Es kann vorgesehen sein, dass die Flottenteilnehmer 2 jeweils eine Rangfolge 14 der ausgewählten Elemente erstellen und die Auswahl 10 in Form der erstellten Rangfolge 14 an den zentralen Server 20 übermittelt wird, wobei der zentrale Server 20 zum Zusammenführen eine zusammengeführte Rangfolge 15 auf Grundlage der übermittelten Rangfolgen 14 erstellt. Das Prunen des Neuronalen Netzes 9 erfolgt dann auf Grundlage der zusammengeführten Rangfolge 15.

Es kann vorgesehen sein, dass dem Neuronalen Netz 9 zum Bestimmen der jeweiligen Auswahl 10 jeweils zeitlich sich ändernde Eingangsdaten 7 zugeführt werden, wobei zeitliche Aktivierungsdifferenzen von Elementen des Neuronalen Netzes 9 für zeitlich benachbarte Eingangsdaten 7 bestimmt werden, und wobei das Auswählen der Elemente des Neuronalen Netzes 9 in Abhängigkeit der bestimmten zeitlichen Aktivierungsdifferenzen erfolgt. Insbesondere kann vorgesehen sein, dass zum Auswählen eine Rangfolge 14 der Elemente des Neuronalen Netzes 9 auf Grundlage der jeweils für die Elemente bestimmten zeitlichen Aktivierungsdifferenzen erstellt wird. Die Auswahl 10 umfasst dann die derart erstellte Rangfolge 14.

Es kann vorgesehen sein, dass das Neuronale Netz 9 im Anschluss an das Prunen im zentralen Server 2 nachtrainiert wird.

Es kann vorgesehen sein, dass die Elemente zum Prunen zumindest vorerst deaktiviert werden. Hierzu werden Parameter des Elementes beispielsweise auf Null gesetzt, sodass das Element in dem Neuronalen Netz 9 keinen Einfluss mehr auf ein Ergebnis in der nachfolgenden Schicht bzw. der Ausgangsschicht des Neuronalen Netzes 9 hat. Stellt sich nach dem Deaktivieren eines Elements beispielsweise heraus, dass eine funktionale Güte des Neuronalen Netzes 9 zu stark beeinträchtigt ist, so kann das Element wieder aktiviert werden. Insbesondere kann das wieder aktivierte Element anschließend markiert werden, sodass es bei nachfolgenden Durchläufen des Verfahrens nicht erneut deaktiviert und/oder geprunt wird. In einem späteren Schritt, insbesondere nach einem Nachtrainieren des Neuronalen Netzes 9 kann das deaktivierte Element entfernt werden, das heißt eine Struktur des Neuronalen Netzes 9 wird angepasst, sodass das geprunte Neuronale Netz 12 erzeugt wird. Dies erfolgt insbesondere, wenn eine funktionale Güte oder sonstige Zielgrößen trotz des deaktivierten Elements erreicht werden.

Ferner kann vorgesehen sein, dass das Prunen erst erfolgt, wenn mindestens ein Auslösekriterium 30 erfüllt ist. Das Auslösekriterium 30 kann beispielsweise ein Erreichen einer vorgegebenen Anzahl von Elementen in der zusammengeführten Rangfolge 15 sein. Ferner kann das Auslösekriterium 30 zusätzlich oder alternativ auch eine Konvergenz der zusammengeführten Rangfolge 15 sein. Konvergenz der zusammengeführten Rangfolge 15 bedeutet hierbei, dass sich die Elemente in der zusammengeführten Rangfolge 15 über eine vorgegebene Anzahl von Durchläufen des Verfahrens oder eine vorgegebene Zeitdauer zumindest für eine vorgegebene Anzahl an Rängen nicht mehr verändert. Das Vorliegen des Auslösekriteriums 30 wird insbesondere mittels des zentralen Servers 20 überprüft.

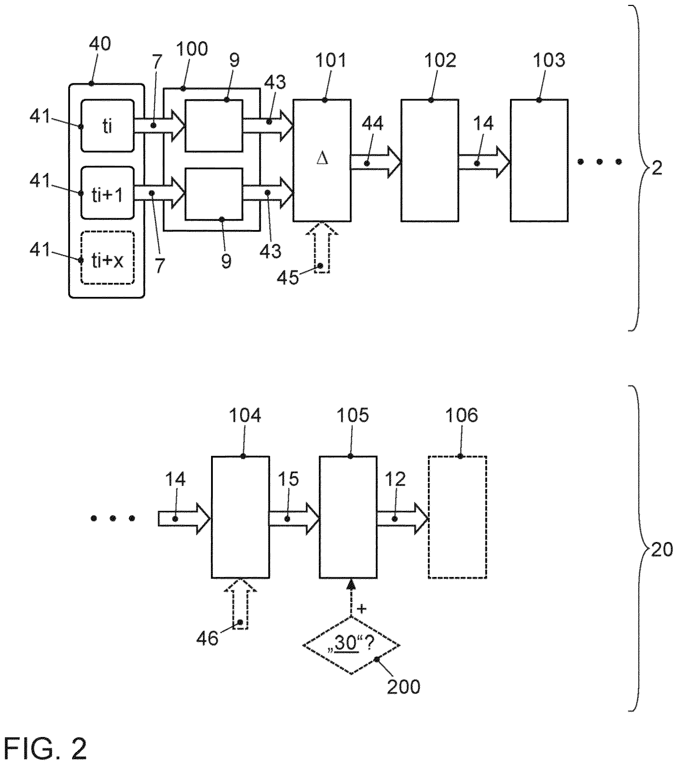

In Fig. 2 ist ein schematisches Flussdiagramm zur Verdeutlichung einer Ausführungsform des Verfahrens zum Komprimieren eines Neuronalen Netzes 9 gezeigt. Das Verfahren wird mittels eines Systems 1 ausgeführt, welches beispielsweise wie die in der Fig. 1 gezeigte Ausführungsform ausgebildet ist. Ein Teil des Verfahrens wird hierbei jeweils in den Flottenteilnehmern 2 ausgeführt, ein anderer Teil in dem zentralen Server 20. Das Flussdiagramm wird am Beispiel von Eingangsdaten 7 erläutert, die in Form eines aus Videoeinzelbildern 41 (Frames) bestehenden Videos 40 bereitgestellt werden. Die Videoeinzelbilder 41 korrespondieren hierbei jeweils mit einem Zeitpunkt $t_i$.

In einem Verfahrensschritt 100 werden die Videoeinzelbilder 41 dem Neuronalen Netz 9 zugeführt. Dies ist für zwei benachbarte Zeitschritte gezeigt, das heißt für ein Videoeinzelbild 41, das mit dem Zeitpunkt $t_i$ korrespondiert, und für ein Videoeinzelbild 41, das mit dem darauffolgenden Zeitpunkt $t_{i+1}$ korrespondiert. Das Neuronale Netz 9 wird auf die Videoeinzelbilder 41 angewandt und inferiert ein Ergebnis an Ausgängen einer Ausgangsschicht des Neuronalen Netzes 9. Das Ergebnis kann beispielsweise eine Objekterkennung bzw. -klassifikation und/oder das Erstellen von Bounding Boxes für die erkannten Objekte umfassen. Beim Inferieren werden Werte für Aktivierungen 43 von Elementen des Neuronalen Netzes 9 erfasst bzw. ausgelesen. Ist das Neuronale Netz 9 als Faltungsnetz ausgebildet, so entsprechen die Aktivierungen 43 den jeweiligen Werten an Ausgängen von Filtern des Faltungsnetzes. Das Ergebnis wird beispielsweise jeweils als Liste bereitgestellt, in der zu jedem Element des Neuronalen Netzes 9 die zugehörige Aktivierung 43 für die betrachteten Zeitpunkte $t_i$ und $t_{i+1}$ hinterlegt ist.

In einem Verfahrensschritt 101 wird aus den Werten für die Aktivierungen 43 der einzelnen Elemente eine zeitliche Aktivierungsdifferenz 44 für die beiden betrachteten Zeitpunkte $t_i$ und $t_{i+1}$ bestimmt. Dies erfolgt elementeweise für alle Elemente des Neuronalen Netzes 9. Hierbei wird insbesondere ein Betrag einer Differenz zwischen den Werten der Aktivierung 43 der einzelnen Elemente betrachtet. Für jedes der Elemente des Neuronalen Netzes 9 steht anschließend eine zeitliche Aktivierungsdifferenz 44 in Bezug auf die zwei Zeitpunkte $t_i$ und $t_{i+1}$ zur Verfügung. Das Ergebnis wird beispielsweise als Liste bereitgestellt, in der zu jedem Element des Neuronalen Netzes 9 die zeitliche Aktivierungsdifferenz 44 für die betrachteten Zeitpunkte $t_i$ und $t_{i+1}$ hinterlegt ist.

Es kann vorgesehen sein, dass die zeitlichen Aktivierungsdifferenzen 44 gemittelt werden und die nachfolgenden Verfahrensschritte 102-106 ausgehend von den gemittelten Aktivierungsdifferenzen 44 durchgeführt werden.

Es kann vorgesehen sein, dass zumindest ein Teil der bestimmten zeitlichen Aktivierungsdifferenzen 44 in Abhängigkeit von mindestens einem Einflussparameter 45 bestimmt wird. Beispielsweise kann eine Geschwindigkeit (bereitgestellt z.B. über einen GPS-Sensor), ein aktuelles Wetter (bereitgestellt z.B. über einen Regensensor) und/oder ein Lenkwinkel (bereitgestellt z.B. über einen Lenkwinkelsensor) dazu verwendet werden, eine bestimmte zeitliche Aktivierungsdifferenz 44 situationsbedingt zu verstärken oder abzuschwächen.

In einem Verfahrensschritt 102 werden die bestimmten zeitlichen Aktivierungsdifferenzen 44 der Größe nach sortiert. Es entsteht hierdurch eine Rangfolge 14, in der die Elemente des Neuronalen Netzes 9 mit den größten zeitlichen Aktivierungsdifferenzen 44 die oberen Ränge belegen.

In einem Verfahrensschritt 103 werden die erstellten Rangfolgen 14 von den Flottenteilnehmern 2 über Kommunikationsschnittstellen an den zentralen Server 20 übermittelt.

Im zentralen Server 20 wird in einem Verfahrensschritt 104 auf Grundlage der übermittelten Rangfolgen 14 eine zusammenfasste Rangfolge 15 erzeugt. Das Zusammenführen, das auch als Aggregieren bezeichnet werden kann, kann insbesondere das Bilden eines arithmetischen Mittelwertes, geometrische Mittelungsverfahren (z.B. können Schwerpunkte von aus den einzelnen Rangfolgen 14 gebildeten Vektoren gebildet werden), momentenbasierte Mittelungsverfahren, schwarmbasierte Mittelungsverfahren, geographische Mittelungsverfahren und/oder sicherheitsfokussierte Mittelungsverfahren umfassen.

Es kann vorgesehen sein, dass die zusammengeführte Rangfolge 15 unter Berücksichtigung mindestens einer Zielgröße 46 erstellt wird. Die mindestens eine Zielgröße 46 kann beispielsweise eine Robustheit des Neuronalen Netzes 9 betreffen. Ferner können Elemente bzw. Filter, die innerhalb des Neuronalen Netzes 9 einen größeren Einfluss haben, trotz einer großen zeitlichen Aktivierungsdifferenz 44 beibehalten werden. Auch können Elemente bzw. Filter, die einer Funktionalität nach anderen Elementen bzw. Filtern gleichen (z.B. Filter, die Kameradaten im Wege einer Faltung mit einer Filterfunktion filtern), in der zusammengesetzten Rangfolge 15 nach vorne verschoben werden, das heißt beim Prunen bzw. beim Entfernen bevorzugt werden. Hingegen können Elemente bzw. Filter, die anderen Elementen bzw. Filtern nicht ähneln, in der zusammengesetzten Rangfolge 15 nach hinten verschoben werden, das heißt weniger bevorzugt gelöscht werden. Weitere Zielgrößen 46 können pluralitätsorientiert sein, das heißt dafür sorgen, dass viele verschiedene Merkmale in den Eingangsdaten 7 erkannt bzw. herausgefiltert werden. Entsprechend wird eine zusammengesetzte Rangfolge 15 dahingehend angepasst, dass weiterhin viele verschiedene Merkmale bzw. eine Mindestanzahl an unterschiedlichen Merkmalen erkannt bzw. herausgefiltert werden. Eine weitere Zielgröße 46 kann auch eine Leistungsfähigkeit (Performanz) des Neuronalen Netzes 9 sein.

Es kann vorgesehen sein, dass die Elemente zum Prunen zumindest vorerst deaktiviert werden. In einem nachfolgenden Verfahrensschritt, beispielsweise nach einem erfolgreichen Nachtrainieren, kann das Neuronale Netz 9 dann geprunt werden.

In einem Verfahrensschritt 105 wird das Neuronale Netz 9 geprunt, indem Elemente des Neuronalen Netzes 9 mit den größten zeitlichen Aktivierungsdifferenzen 44 gemäß der zusammengesetzten Rangfolge 15 aus der Struktur des Neuronalen Netzes 9 entfernt werden. Als Ergebnis wird ein gepruntes Neuronales Netz 12 bereitgestellt.

Es kann vorgesehen sein, dass in einem Verfahrensschritt 200 vorher geprüft wird, ob mindestens ein Auslösekriterium 30 erfüllt ist. Erst wenn das Auslösekriterium 30 erfüllt ist, wird das Prunen des Neuronale Netzes 9 durchgeführt.

Es kann in einem Verfahrensschritt 106 zur Erhöhung einer funktionalen Güte des geprunten Neuronalen Netzes 12 vorgesehen sein, dass das geprunte Neuronale Netz 12 nachtrainiert wird.

Die beschriebenen Verfahrensschritte 100-106 werden für weitere Zeitpunkte $t_{i+x}$ durchgeführt. Es ist insbesondere vorgesehen, dass das Prunen in Verfahrensschritt 105 auf Grundlage einer zusammengeführten Rangfolge 15 durchgeführt wird, die für Mittelwerte der zeitlichen Aktivierungsdifferenzen 44 erstellt wurde. Hierbei wird insbesondere über mehrere Zeitpunkte $t_i$ gemittelt.

Es ist insbesondere vorgesehen, dass die Verfahrensschritte 100-106 zyklisch wiederholt werden, wobei jeweils aktuelle Eingangsdaten 7 verwendet werden. Insbesondere ist vorgesehen, dass die Verfahrensschritte 100-106 unter Verwendung des (nachtrainierten) geprunten Neuronalen Netzes 12 wiederholt werden, wobei das Neuronale Netz 9 hierzu gegen das jeweils (nachtrainierte) geprunte Neuronale Netz 12 ausgetauscht wird.

Durch die beschriebene Ausführungsform des Verfahrens kann das Neuronale Netz 9 komprimiert werden, wobei sich gleichzeitig eine Stabilität des Neuronalen Netzes 9 erhöht, da instabile Elemente des Neuronalen Netzes 9 entfernt bzw. deaktiviert werden.

Nachfolgend wird das Bestimmen einer Rangfolge ausgehend von zeitlichen Aktivierungsdifferenzen mit Hilfe eines mathematischen Beispiels verdeutlicht. Es wird hierbei davon ausgegangen, dass die Eingangsdaten aus einer Videosequenz aus Videoeinzelbildern bestehen. Je nach Anzahl der Videoeinzelbilder pro Zeiteinheit (z.B. Frames pro Sekunde) ergeben sich nur geringe Änderungen in benachbarten Videoeinzelbildern. Dies macht sich das Verfahren zunutze und verwendet dies zum stabilitätsbasierten Pruning des Neuronalen Netzes. Das Verfahren wird insbesondere auf ein gut trainiertes Neuronales Netz, insbesondere ein Convolutional Neuronal Network (CNN), angewendet. Als Elemente des Neuronalen Netzes werden insbesondere Filter des CNN betrachtet. Hierbei werden Filter (auch als Filterkerne bezeichnet), deren Aktivierungen bei benachbarten Videoeinzelbildern, das heißt bei zeitlich sich ändernden Eingangsdaten, eine große Änderung in der Aktivierung zeigen (das heißt bei denen eine zeitliche Aktivierungsdifferenz groß ist) als instabil betrachtet. In der Ausführungsform des Verfahrens werden solche Filter in einer Rangfolge höher gewertet. Als Eingangsdaten werden nur unmarkierte (ungelabelte) Eingangsdaten benötigt, beispielsweise Videoeinzelbilder einer Videosequenz, die mit einer Kamera zum Erfassen eines Umfelds eines Kraftfahrzeugs erfasst wurden.

Eine (Faltungs-)Schicht umfasst insbesondere mehrere Filter (auch als Filterkerne bezeichnet), wobei jeder Filter insbesondere eine gesamte Ausgabe einer vorangehenden Schicht erhält und jeder Filter eine zugehörige Merkmalskarte (engl. feature map) als Ausgabe bereitstellt.

Für ein Videoeinzelbild in einem sequentiellen Datensatz (Videosequenz) mit einer Höhe H, einer Breite W, Kanälen C und einem Zeitpunkt t, mit $t \in \mathbb{N}: [1 \ldots T]$, wird $x_t \in G^{H \times W \times C}$ als Videoeinzelbild eines Datensatzes $\chi$ definiert, wobei $G = \{0 \leq z \leq 255 | z \in \mathbb{N}\}$. Das Videoeinzelbild $x_t$ ist die Eingabe (das heißt entspricht den Eingangsdaten am Eingang) eines Neuronalen Netzes $\mathfrak{F}(\cdot, \theta)$, wobei $\theta$ Parameter des Neuronalen Netzes sind. Dieses Neuronale Netz $\mathfrak{F}(\cdot, \theta)$ umfasst $L \in \mathbb{N}$ (Faltungs-)Schichten, deren Ausgänge $\Psi_l(\cdot) \in \mathbb{R}^{H_l \times W_l \times k_l}$ sind, mit einer Höhe $H_l$, einer Breite $W_l$ und einer Anzahl von Merkmalskarten $k_l$ für $l \in \{1, \ldots, L\}$.

Mit $\Psi_{l,j}$ wird die j-te Merkmalskarte (feature map) des Ausgangs der Schicht $l$ bezeichnet, das heißt die zum Filter j der Schicht I zugehörige Merkmalskarte, wobei $j \in \{1, ..., k_l\}$. Als Satz aller Merkmalskarten in dem Neuronalen Netz zu einem Zeitpunkt $t$ kann dann $\mathcal{F}_t = \{\Psi_{l,j}\} \ \forall \ l = \{1, ..., L\}, j = \{1, ..., k_l\}$ definiert werden.

Eine Stabilität ist insbesondere definiert als eine Änderung der Ausgabe $\Psi_{l,j}$ (Aktivierungsdifferenz) in Bezug auf eine Änderung der zugehörigen Eingabe $x_t$, das heißt es ergibt sich für ein Filter $j$ in der Schicht $l$ und einen Zeitpunkt t eine Rangfolgenfunktion *rank*:

$$rank(l, j, t) = \left| \frac{\partial \Psi_{l,j}(x_t)}{\partial x_t} \right| \qquad (1)$$

mit

$$|\cdot|: \ \mathbb{R}^{H_l \times W_l} \to \mathbb{R}_{\geq 0}$$

Einfach ausgedrückt, ist eine Instabilität umso größer, je größer ein resultierender Wert der Rangfolgenfunktion für einen betrachteten Filter ist. Die Rangfolgenfunktion wird insbesondere für jedes Element des Neuronalen Netzes, im aktuellen Beispiel also für jeden Filter, bestimmt.

Die Änderungen in den Ausgaben $\Psi_{l,j}(x_t)$, das heißt in den Aktivierungen der Filter, können zwei Ursachen haben. Erstens kann eine Änderung am Ausgang durch eine Änderung im Videoeinzelbild $x_t$ am Eingang hervorgerufen werden. Zweitens kann eine Änderung auch durch eine Änderung der Aktivierungen am Ausgang einer voranstehenden Schicht $\psi_{l-1}(x_t)$ hervorgerufen werden.

Um eine Differenz zwischen aufeinanderfolgenden Videoeinzelbildern (d.h. zeitlich benachbarten Eingangsdaten) zu berechnen, kann beispielsweise der an sich bekannte Index der Strukturellen Ähnlichkeit (Structural Similarity Index, SSIM) verwendet werden. Der SSIM wird zur Messung einer Ähnlichkeit zwischen zwei Bildern verwendet.

$$\Delta x_t = 1 - SSIM(x_t, x_{t-1}) \qquad (2)$$

Da die Stabilität von $\Psi_{l,j}$ auch von einer Stabilität der Ausgänge (Aktivierungen) von $\psi_{l-1}$ abhängt, sollte verhindert werden, dass ein Filter in der Schicht $l$ aufgrund einer Instabilität in der Schicht $l$ - 1 geprunt wird. Daher wird der Beitrag der voranstehenden Schicht in der Rangfolgenfunktion berücksichtigt. $\mathcal{D}_{l,t}$ ist die normalisierte Ausgabe der I-ten Schicht zur nachfolgenden Schicht zum Zeitpunkt t. Diese wird in der nachfolgenden Gleichung berechnet. Um die Änderungen der Ausgaben (Aktivierungen) der Filter im gesamten Neuronalen Netz miteinander vergleichen zu können, werden die Ausgaben (Aktivierungen) normalisiert mit einer Höhe $H_l$, einer Breite $W_l$ und einer Anzahl $k_l$ von Kanälen (Merkmalkarten, engl. feature maps) der Schicht $l$.

$$\mathcal{D}_{l,t} = \left| \frac{\psi_l(x_t) - \psi_l(x_{t-1})}{H_l \times W_l \times k_l} \right| \qquad (3)$$

Um für jeden Filter dessen stabilitätsbasierten Rang zu berechnen, werden die Gleichungen (2) und (3) mit der Gleichung (1) kombiniert. Der Rang ist hierbei definiert als $R_{l,j}^a$, wobei $a \in \mathbb{N}: [1, ..., A]$ eine Videosequenz ist. Gleichung (4) definiert den Rang als eine über alle Zeitpunkte t (d.h. über eine Anzahl T von Videoeinzelbildern) gemittelte (zeitliche) Aktivierungsdifferenz mit Bezug auf eine Änderung an den Eingängen der Filter, das heißt mit Bezug auf eine (zeitliche) Änderung der Eingangsdaten:

$$R_{l,j}^a = \sum_{t=1}^{T} \frac{1}{T} \left| \frac{\Psi_{l,j}(x_t) - \Psi_{l,j}(x_{t-1})}{\Delta x_t + \lambda(\mathcal{D}_{l-1,t} \times H_l \times W_l)} \right| \qquad (4)$$

$\lambda$ ist hierbei ein Gewichtungsfaktor, mit dem ein Einfluss der voranstehenden Schicht eingestellt werden kann. Hierbei wird der Einfluss der voranstehenden Schicht mit einer Größe $H_l \times W_l$ der jeweils betrachteten Schicht $l$ gewichtet.

Hieraus werden Mittelwerte bestimmt, das heißt der Rang $R_{l,j}^a$ wird über mehrere unmarkierte (ungelabelte) Videosequenzen A zusammengefasst und (arithmetisch) gemittelt, wie in Gleichung (5) gezeigt.

$$R_{l,j} = \frac{1}{A} \sum_{a=1}^{A} R_{l,j}^{a} \qquad (5)$$

Größere Werte von $R_{l,j}$ bedeuten jeweils eine größere Instabilität des betrachteten Filters (j-ter Filter in der l-ten Schicht). Es ist möglich, beim Mitteln andere Verfahren zu verwenden, z.B. momentenbasierte Mittelungsverfahren oder auch Mittelungsverfahren, bei denen einzelne Aktivierungsdifferenzen jeweils gewichtet berücksichtigt werden.

Die auf diese Weise erstellte Rangfolge wird an den zentralen Server übermittelt, wo die übermittelte Rangfolge mit übermittelten Rangfolgen anderer Flottenteilnehmer zusammengeführt wird.

Das Neuronale Netz wird anschließend auf Grundlage der zusammengeführten Rangfolge geprunt, beispielsweise werden die Filter in den oberen (5, 10, 20,... etc.) Rängen der zusammengeführten Rangfolge aus dem Neuronalen Netz entfernt, da diese die instabilsten Filter bzw. Elemente des Neuronalen Netzes sind.

Das mathematische Beispiel bezieht sich auf eine Videosequenz bzw. Videoeinzelbilder als Eingangsdaten. Prinzipiell ist das Vorgehen bei einer anderen Art von Eingangsdaten jedoch analog.

**Bezugszeichenliste**

| | |
|---|---|
| 1 | System |
| 2 | Flottenteilnehmer |
| 3 | Recheneinrichtung (Flottenteilnehmer) |
| 4 | Speichereinrichtung (Flottenteilnehmer) |
| 5 | Kommunikationsschnittstelle (Flottenteilnehmer) |
| 6 | Sensorik |
| 7 | Eingangsdaten |
| 8 | Eingangsschnittstelle |
| 9 | Neuronales Netz |
| 10 | Auswahl |
| 11 | zusammengeführte Auswahl |
| 12 | gepruntes Neuronales Netz |
| 13 | Übermittlungskriterium |
| 14 | Rangfolge |
| 15 | zusammengeführte Rangfolge |
| 20 | zentraler Server |
| 21 | Recheneinrichtung (zentraler Server) |
| 22 | Speichereinrichtung (zentraler Server) |
| 23 | Kommunikationsschnittstelle (zentraler Server) |
| 30 | Auslösekriterium |
| 40 | Video |
| 41 | Videoeinzelbild |
| 43 | Aktivierung |
| 44 | zeitliche Aktivierungsdifferenz |
| 45 | Einflussparameter |
| 46 | Zielgröße |
| 50 | Kraftfahrzeug |
| 100-106 | Verfahrensschritte |
| 200 | Verfahrensschritt |
| $t_i$ | Zeitpunkt |
| $t_{i+1}$ | Zeitpunkt |
| $t_{i+x}$ | weiterer Zeitpunkt |

**Patentansprüche**

**1.** Verfahren zum Komprimieren eines Neuronalen Netzes (9),

wobei Flottenteilnehmer (2) einer Fahrzeugflotte lokal das Neuronale Netz (9) ausführen und jeweils während mindestens einer Inferenzphase eine Auswahl (10) von Elementen des Neuronalen Netzes (9) bestimmen, die geprunt werden sollen,

wobei die Flottenteilnehmer (2) die jeweils bestimmte Auswahl (10) an einen zentralen Server (20) übermitteln,

wobei der zentrale Server (20) die jeweils übermittelten Auswahlen (10) zusammenführt und eine zusammengeführte Auswahl (11) erzeugt, und

wobei der zentrale Server (20) das Neuronale Netz (9) auf Grundlage der zusammengeführten Auswahl (11) prunt,

wobei das geprunte Neuronale Netz (9) anschließend an mindestens einen Flottenteilnehmer (2) übermittelt wird, wobei der mindestens eine Flottenteilnehmer (2) das geprunte Neuronale Netz (9) von dem zentralen Server (20) empfängt und das lokal in einer Speichereinrichtung hinterlegte Neuronale Netz (9) durch das empfangene geprunte Neuronale Netz (9) ersetzt.

2. Verfahren nach Anspruch 1, wobei das Übermitteln der Auswahl (10) an den zentralen Server (20) erfolgt, wenn mindestens ein Übermittlungskriterium (13) erfüllt ist.

3. Verfahren nach einem der vorangegangenen Ansprüche, wobei die Flottenteilnehmer (2) jeweils eine Rangfolge (14) der ausgewählten Elemente erstellen und die Auswahl (10) in Form der erstellten Rangfolge (14) an den zentralen Server (20) übermittelt wird, wobei der zentrale Server (20) zum Zusammenführen eine zusammengeführte Rangfolge (15) auf Grundlage der übermittelten Rangfolgen (14) erstellt, und wobei das Prunen des Neuronalen Netzes (9) auf Grundlage der zusammengeführten Rangfolge (15) erfolgt.

4. Verfahren nach einem der vorangegangenen Ansprüche, wobei dem Neuronalen Netz (9) zum Bestimmen der jeweiligen Auswahl (10) jeweils zeitlich sich ändernde Eingangsdaten (7) zugeführt werden, wobei zeitliche Aktivierungsdifferenzen (44) von Elementen des Neuronalen Netzes (9) für zeitlich benachbarte Eingangsdaten (7) bestimmt werden, und wobei das Auswählen der Elemente des Neuronalen Netzes (9) in Abhängigkeit der bestimmten zeitlichen Aktivierungsdifferenzen (44) erfolgt.

5. Verfahren nach einem der vorangegangenen Ansprüche, wobei das Neuronale Netz (9) im Anschluss an das Prunen nachtrainiert wird.

6. Verfahren nach einem der vorangegangenen Ansprüche, wobei die Elemente zum Prunen zumindest vorerst deaktiviert werden.

7. Verfahren nach einem der vorangegangenen Ansprüche, wobei das Prunen erst erfolgt, wenn mindestens ein Auslösekriterium (30) erfüllt ist.

8. Flottenteilnehmer (2) für eine Fahrzeugflotte, umfassend:

eine Recheneinrichtung (3),
wobei die Recheneinrichtung (3) derart ausgebildet ist, lokal ein Neuronales Netz (9) auszuführen und jeweils während mindestens einer Inferenzphase eine Auswahl (10) von Elementen des Neuronalen Netzes (9) zu bestimmen, die geprunt werden sollen,
und die bestimmte Auswahl (10) an einen zentralen Server (20) zu übermitteln;
ferner ein gepruntes Neuronales Netz (9) von dem zentralen Server (20) zu empfangen und das lokal in einer Speichereinrichtung hinterlegte Neuronale Netz (9) durch das empfangene geprunte Neuronale Netz (9) zu ersetzen.

9. Zentraler Server (20), umfassend:

eine Recheneinrichtung (3),
wobei die Recheneinrichtung (3) derart ausgebildet ist, von Flottenteilnehmern (2) jeweils übermittelte Auswahlen (10) von Elementen eines Neuronalen Netzes (9) zusammenzuführen und eine zusammengeführte Auswahl (11) zu erzeugen, und das Neuronale Netz (9) auf Grundlage der zusammengeführten Auswahl (11) zu prunen, und das geprunte Neuronale Netz (9) anschließend an mindestens einen Flottenteilnehmer (2) zu übermitteln.

10. System (1), umfassend:
mindestens einen Flottenteilnehmer (2) gemäß Anspruch 8 und einen zentralen Server (20) gemäß Anspruch 9.

**Claims**

1. Method for compressing a neural network (9),

   wherein fleet members (2) of a vehicle fleet execute the neural network (9) locally, and in each case determine, during at least one inference phase, a selection (10) of elements of the neural network (9) that are intended to be pruned,
   wherein the fleet members (2) transmit the selection (10) determined in each case to a central server (20),
   wherein the central server (20) merges the selections (10) determined in each case and generates a merged selection (11), and
   wherein the central server (20) prunes the neural network (9) on the basis of the merged selection (11),
   wherein the pruned neural network (9) is subsequently transmitted to at least one fleet member (2), wherein the at least one fleet member (2) receives the pruned neural network (9) from the central server (20) and replaces the neural network (9) stored locally in a storage device with the received pruned neural network (9).

2. Method according to claim 1, wherein the selection (10) is transmitted to the central server (20) if at least one transmission criterion (13) is met.

3. Method according to either of the preceding claims, wherein the fleet members (2) each create a ranking (14) of the selected elements and the selection (10) is transmitted to the central server (20) in the form of the created ranking (14), wherein the central server (20) creates a merged ranking (15) on the basis of the transmitted rankings (14) for merging, and wherein the neural network (9) is pruned on the basis of the merged ranking (15).

4. Method according to any of the preceding claims, wherein temporally changing input data (7) are fed to the neural network (9) for determining the relevant selection (10), wherein temporal activation differences (44) of elements of the neural network (9) are determined for temporally adjacent input data (7), and wherein the elements of the neural network (9) are selected depending on the determined temporal activation differences (44).

5. Method according to any of the preceding claims, wherein the neural network (9) is retrained following pruning.

6. Method according to any of the preceding claims, wherein the elements are at least initially deactivated for pruning.

7. Method according to any of the preceding claims, wherein pruning only takes place if at least one trigger criterion (30) is met.

8. Fleet member (2) for a vehicle fleet, comprising:

   a computing device (3),
   wherein the computing device (3) is designed in such a way as to execute a neural network (9) locally, and in each case determine, during at least one inference phase, a selection (10) of elements of the neural network (9) that are intended to be pruned, and to transmit the determined selection (10) to a central server (20), and also to receive a pruned neural network (9) from the central server (20) and to replace the neural network (9) stored locally in a storage device with the received pruned neural network (9).

9. Central server (20), comprising:

   a computing device (3),
   wherein the computing device (3) is designed in such a way as to merge selections (10) of elements of a neural network (9) in each case transmitted by fleet members (2) and to generate a merged selection (11), and to prune the neural network (9) on the basis of the merged selection (11), and to subsequently transmit the pruned neural network (9) to at least one fleet member (2).

10. System (1) comprising:
    at least one fleet member (2) according to claim 8 and a central server (20) according to claim 9.

**Revendications**

1. Procédé pour la compression d'un réseau neuronal (9),

    dans lequel les participants à une flotte (2) d'une flotte de véhicules exécutent localement le réseau neuronal (9) et déterminent respectivement, pendant au moins une phase d'inférence, une sélection (10) d'éléments du réseau neuronal (9) qui doivent être élagués,
    dans lequel les participants à la flotte (2) transmettent la sélection (10) respectivement déterminée à un serveur central (20),
    dans lequel le serveur central (20) fusionne les sélections (10) respectivement transmises et produit une sélection fusionnée (11), et
    dans lequel le serveur central (20) élague le réseau neuronal (9) sur la base de la sélection fusionnée (11),
    dans lequel le réseau neuronal (9) élagué est ensuite transmis à au moins un participant à la flotte (2), dans lequel l'au moins un participant à la flotte (2) reçoit le réseau neuronal (9) élagué du serveur central (20) et remplace le réseau neuronal (9) enregistré localement dans un dispositif de mémoire par le réseau neuronal (9) élagué reçu.

2. Procédé selon la revendication 1, dans lequel la transmission de la sélection (10) au serveur central (20) est effectuée lorsqu'au moins un critère de transmission (13) est satisfait.

3. Procédé selon l'une des revendications précédentes, dans lequel les participants à la flotte (2) établissent respectivement un classement (14) des éléments sélectionnés et la sélection (10) est transmise au serveur central (20) sous la forme du classement (14) établi, dans lequel le serveur central (20) établit, pour la fusion, un classement fusionné (15) sur la base des classements (14) transmis, et dans lequel l'élagage du réseau neuronal (9) s'effectue sur la base du classement fusionné (15).

4. Procédé selon l'une des revendications précédentes, dans lequel des données d'entrée (7) variant respectivement dans le temps sont amenées au réseau neuronal (9) pour la détermination de la sélection (10) respective, dans lequel des différences d'activation dans le temps (44) d'éléments du réseau neuronal (9) sont déterminées pour des données d'entrée (7) voisines dans le temps, et dans lequel la sélection des éléments du réseau neuronal (9) est effectuée en fonction des différences d'activation dans le temps (44) déterminées.

5. Procédé selon l'une des revendications précédentes, dans lequel le réseau neuronal (9) est réentraîné à la suite de l'élagage.

6. Procédé selon l'une des revendications précédentes, dans lequel les éléments pour l'élagage sont désactivés au moins dans un premier temps.

7. Procédé selon l'une des revendications précédentes, dans lequel l'élagage n'est effectué que lorsqu'au moins un critère de déclenchement (30) est satisfait.

8. Participant à une flotte (2) pour une flotte de véhicules, comprenant :

    un dispositif de calcul (3),
    dans lequel le dispositif de calcul (3) est conçu de manière à exécuter localement un réseau neuronal (9) et à déterminer respectivement, pendant au moins une phase d'inférence, une sélection (10) d'éléments du réseau neuronal (9) qui doivent être élagués, et à transmettre la sélection (10) déterminée à un serveur central (20) ;
    en outre, à recevoir un réseau neuronal (9) élagué du serveur central (20) et à remplacer le réseau neuronal (9) enregistré localement dans un dispositif de mémoire par le réseau neuronal (9) élagué reçu.

9. Serveur central (20), comprenant :

    un dispositif de calcul (3),
    dans lequel le dispositif de calcul (3) est conçu de manière à fusionner des sélections (10) d'éléments d'un réseau neuronal (9) transmises respectivement par des participants à la flotte (2) et à produire une sélection fusionnée (11), et à élaguer le réseau neuronal (9) sur la base de la sélection fusionnée (11), et à transmettre ensuite le réseau neuronal (9) élagué à au moins un participant à la flotte (2).

**10.** Système (1), comprenant :
au moins un participant à une flotte (2) selon la revendication 8 et un serveur central (20) selon la revendication 9.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180336468 A1
- US 20180114114 A1
- US 20190114543 A1
- WO 2018218149 A1

**In der Beschreibung aufgeführte Nicht-Patentliteratur**

- **AUS JUN ZHANG et al.** Mobile Edge Intelligence and Computing for the Internet of Vehicles. *Proceedings of the IEEE,* 02. Juni 2019, 246-261, https://arxiv.org/pdf/1906.00400.pdf